# EUROPÄISCHE PATENTSCHRIFT

(11) **EP 0 950 561 B1**
(45) Veröffentlichungstag und Bekanntmachung des Hinweises auf die Patenterteilung: **12.05.2004**
(21) Anmeldenummer: 99106258.9
(22) Anmeldetag: 14.04.1999
(51) Int. Cl.: B60N 2/44, B60N 2/60, A47C 31/10, A47C 31/02

(54) **Sitzbezug zum Schutz eines Kraftfahrzeug-Sitzes aus einem doppellagigen Teil aus Kunststoffolie**
Seat cover for protecting motor car seats made of a double-layer plastic film
Revêtement pour la protection de sièges de véhicules automobiles composé d'une feuille de plastique en double

(30) Priorität: 17.04.1998 DE 19817058
(43) Veröffentlichungstag der Anmeldung: 20.10.1999
(73) Patentinhaber: Horn & Bauer GmbH & Co. KG, 34613 Schwalmstadt (DE)
(72) Erfinder: Horn, Joachim, 34613 Schwalmstadt-Treysa (DE)
(74) Vertreter: Patentanwälte Rehberg + Hüppe

(56) Entgegenhaltungen:
- WO-A-91/17683
- DE-A- 4 210 232
- DE-C- 19 645 999
- DE-U- 8 416 133

## Beschreibung

Die Erfindung bezieht sich auf einen Sitzbezug zum Schutz eines Kraftfahrzeug-Sitzes mit den im Oberbegriff des Anspruches 1 angegebenen Merkmalen. Der Sitzbezug weist auch eine das Sitzpolster zumindest teilweise umschließende Sitztasche auf. Der Sitzbezug kann - einmal oder auch mehrmals - auch in Kraftfahrzeugwerkstätten bei Reparaturarbeiten, Inspektionen o. dgl. eingesetzt werden. Er kann auch insbesondere für die Erstausrüstung zum Schutz des Sitzes nach dessen Herstellung, während der Montage und dem Versand bis zum Händler genutzt werden.

Sitzbezüge aus Kunststofffolie werden über Kraftfahrzeug-Sitze gestülpt bzw. gezogen, um eine Verschmutzung des Kraftfahrzeug-Sitzes durch Monteure und andere Personen zu verhindern. Bekannt sind solche Sitzbezüge in ihrer Anwendung in Automobilwerkstätten, wenn an Kraftfahrzeugen eine Inspektion oder Reparatur durchgeführt wird. Aber auch bei der Erstausstattung eines Kraftfahrzeugs, also im Automobilwerk bei der Montage des Kraftfahrzeugs, sind die Kraftfahrzeug-Sitze bereits einer Verschmutzungsgefahr ausgesetzt. Diese Verschmutzungsgefahr beginnt sogar bereits beim Hersteller der Kraftfahrzeug-Sitze und bei der Zulieferung der Sitze zum Automobilwerk. Sie setzt sich fort bei der Bestückung von Förderanlagen mit den Sitzen, über die der Transport der Kraftfahrzeug-Sitze zum Montageband des Automobilwerks führt. Weiterhin müssen die Kraftfahrzeug-Sitze in die Automobilkarosserie eingebaut werden. Auch während der Montage weiterer Teile am Kraftfahrzeug kommt eine Vielzahl von Monteuren nacheinander mit den Kraftfahrzeug-Sitzen in Berührung. Schließlich muss das fertig montierte Kraftfahrzeug vom Band gefahren, auf Lastkraftwagen oder Eisenbahnwaggons aufgefahren und letztlich beim Kraftfahrzeughändler noch mehrmals gehandhabt werden, bis das Kraftfahrzeug letztlich in die Hand des Erwerbers bzw. Käufers ausgeliefert werden kann.

Von der Herstellung des Sitzes beim Zulieferer bis zur Auslieferung des Kraftfahrzeugs an den Erwerber oder Kunden kommen die Kraftfahrzeug-Sitze mindestens etwa 50 mal oder auch mehr mit Monteuren und anderen Personen in Kontakt, so dass hier eine erhebliche Verschmutzungsgefahr besteht. Um dieser Verschmutzungsgefahr entgegenzuwirken, sind die bereits beschriebenen Sitzbezüge aus Kunststofffolie bekannt, die oft bereits beim Sitzhersteller, spätestens aber beim Kraftfahrzeughersteller, über die Kraftfahrzeug-Sitze, insbesondere den Fahrersitz, gestülpt werden und erst vor Auslieferung des Fahrzeugs an den Kunden entfernt werden. Solche Sitzbezüge für Erstausrüstung unterscheiden sich üblicherweise nicht sonderlich von den Sitzbezügen, die während der Inspektion oder Reparatur eines Kraftfahrzeugs benutzt werden. Sie können aus vergleichsweise dickerer Kunststofffolie hergestellt werden, die der insoweit größeren Beanspruchung gerecht wird.

Ein Sitzbezug der eingangs beschriebenen Art ist aus der DE 42 10 232 C2 bekannt. Der Sitzbezug weist an seinen beiden Endbereichen je eine Tasche auf, wobei die Sitztasche zur Aufnahme eines Teils des Sitzpolsters und die Rückenlehnentasche zur Aufnahme eines Teils der Rückenlehne des Sitzes bestimmt ist. Der Sitzbezug weist eine Vorderlage auf, die länger gestaltet ist, als es der Summe der wirksamen Längen der Rückenlehne und des Sitzpolsters entspricht. Die Länge der Vorderlage berücksichtigt die Länge des Spaltes zwischen Sitzpolster und Rückenlehne. Aufgrund dieser insoweit länger als üblich ausgebildeten Vorderlage ist es möglich, die Vorderlage in diesem Bereich in eine Fixier- und Eingriffsfalte zu legen und im Bereich des Spaltes zwischen Rückenlehne und Sitzpolster einzuklemmen. Die Fixier- und Eingriffsfalte ist nach beiden Sitz-Seiten hin geschlossen. Die Falte dient zunächst einmal der Fixierung des Sitzbezugs im Bereich des Spalts. Durch die üblicherweise vorhandene Spannung zwischen der Rückenlehne und dem Sitzpolster wird die Falte des Sitzbezugs hier eingeklemmt, was sich nicht nur insofern vorteilhaft auswirkt, dass der die Rückenlehne umschließende Teil der Vorderlage und der das Sitzpolster umschließende Teil der Vorderlage jeweils straffer am Kraftfahrzeug-Sitz anliegen und gehalten werden, sondern es tritt auch der weitere Vorteil auf, dass die Verrutschungsgefahr gerade im Bereich des Spalts erheblich reduziert ist, so dass sich so gut wie keine ungeschützten Flächenbereiche ergeben können.

Es gibt jedoch auch Kraftfahrzeug-Sitze, bei denen der Spalt zwischen Sitzpolster und Rückenlehne eine Höhe von mehreren cm aufweist, so dass eine Klemmwirkung nicht vorhanden ist. Selbst wenn eine Klemmwirkung vorhanden ist, ist die durch die kraftschlüssige Verbindung übertragbare Kraft begrenzt. Bei der Montage des Kraftfahrzeuges am Band kann diese Kraft im Klemmspalt überschritten werden, so dass die Fixier- und Eingriffsfalte aus dem Spalt rutscht und ihre Funktion des Festhaltens des Sitzbezuges mit ordnungsgemäßem Sitz nicht mehr erfüllt. Eine solche eingeklemmte Fixier- und Eingriffsfalte stellt keine Versiegelung bzw. keinen Orginalitätsschutz des Kraftfahrzeug-Sitzes dar. Insbesondere im Sommer bei entsprechend hohen Temperaturen am Montageband des Kraftfahrzeuges besteht die Gefahr, dass der Sitzbezug während der Montage durch die Beanspruchung verrutscht oder sogar teilweise entfernt oder abgezogen wird, weil das Sitzen auf dem aus Kunststofffolie bestehenden Sitzbezug nicht als angenehm empfunden wird. Dabei besteht dann Verschmutzungsgefahr.

Aus der DE 196 45 999 C1 ist ein Sitzbezug bekannt, der sich dadurch kennzeichnet, dass die die Sitztasche mitbildende Rücklage einen durch eine Ausstanzung gebildeten U-förmigen, die Seiten des Sitzpolsters umschließenden Schutzstreifen aufweist, und dass die Vorderlage in dem für den Spalt zwischen Rückenlehne und Sitzpolster bestimmten Bereich zu beiden Seiten je ein Schutzelement zum Abdecken der Gelenkbereiche des Sitzes aufweist. Dieser Sitzbezug geht von dem Gedanken aus, die Sitztasche und andere Teile des Sitzbezuges mit einer verbesserten Schutzwirkung zu versehen. Zu diesem Zweck besitzt die die Sitztasche mitbildende Rücklage einen Schutzstreifen, der sich U-förmig im seitlichen und unteren Bereich des Sitzpolsters um dieses herum erstreckt und dieses abdeckt. Dieser Schutzstreifen erbringt nicht nur eine Schutzwirkung, sondern verbessert gleichzeitig den Sitz der Sitztasche in aufgezogenem Zustand des Sitzbezuges am Kraftfahrzeug-Sitz. Der Gefahr des Verrutschens und Verschmutzens ist damit entgegengewirkt.

Aus der PCT-Anmeldung mit der Veröffentlichungsnummer WO-A-91/17683 ist ein Sitzbezug für einen Kraftfahrzeug-Sitz bekannt, der aus einem doppellagigen Teil aus Kunststofffolie besteht. Die Kunststofffolie wird als Schlauch erstellt, flachgefaltet und unter Abfallbildung durch zwei Längsschnitte angeschnitten. Auf diese Weise entsteht eine durchgehende Vorderlage, die der Summe der Längen der Rückenlehne und des Sitzpolsters entspricht, während die Rücklage unterbrochen ist, wie es für das Überstülpen eines solchen Sitzbezugs über einen Kraftfahrzeug-Sitz erforderlich ist. Die Vorderlage wird durch Querschweißungen mit der Rücklage verbunden, so dass auf diese Art und Weise eine die Rückenlehne des Sitzes zumindest teilweise aufnehmende Rückenlehnentasche und eine das Sitzpolster zumindest teilweise umschließende Sitztasche gebildet werden. Die Sitzbezüge werden aneinanderhängend aus dem endlosen Kunststoffschlauch gebildet, wobei vermittels Querschweißungen und unter erheblichem Anfall weiteren Abfalls im Bereich der Rückenlehnentasche und der Sitztasche seitlich abstehende streifenförmige Fortsätze gebildet werden, auf denen ein Klebstoffauftrag aufgebracht werden kann, der ggf. auch mit einem abziehbaren Schutzstreifen abgedeckt werden kann. Die streifenförmigen Fortsätze werden seitlich rechts und links an einem solchen Sitzbezug gebildet und können nach dem Aufziehen des Sitzbezugs auf dem Kraftfahrzeug-Sitz seitlich um den Sitz herum angelegt und verklebt werden, so dass der Sitzbezug einen straffen Sitz auf dem Kraftfahrzeug-Sitz erhält und gegen Verrutschen entsprechend gesichert ist. Der streifenförmige Fortsatz wird damit nicht im Bereich des Spaltes zwischen Rückenlehne und Sitzpolster an der Vorderlage oder der Rücklage, sondern aus zusätzlichem Kunststoffmaterial seitlich gebildet. Die zahlreichen Abfallstücke verteuern die Herstellung eines solchen Sitzbezugs. Trotz der Verklebung der seitlichen streifenförmigen Fortsätze mit anderen Bereichen des Sitzbezugs kann sich der Sitzbezug in der montierten Stellung relativ zum Kraftfahrzeug-Sitz verschieben.

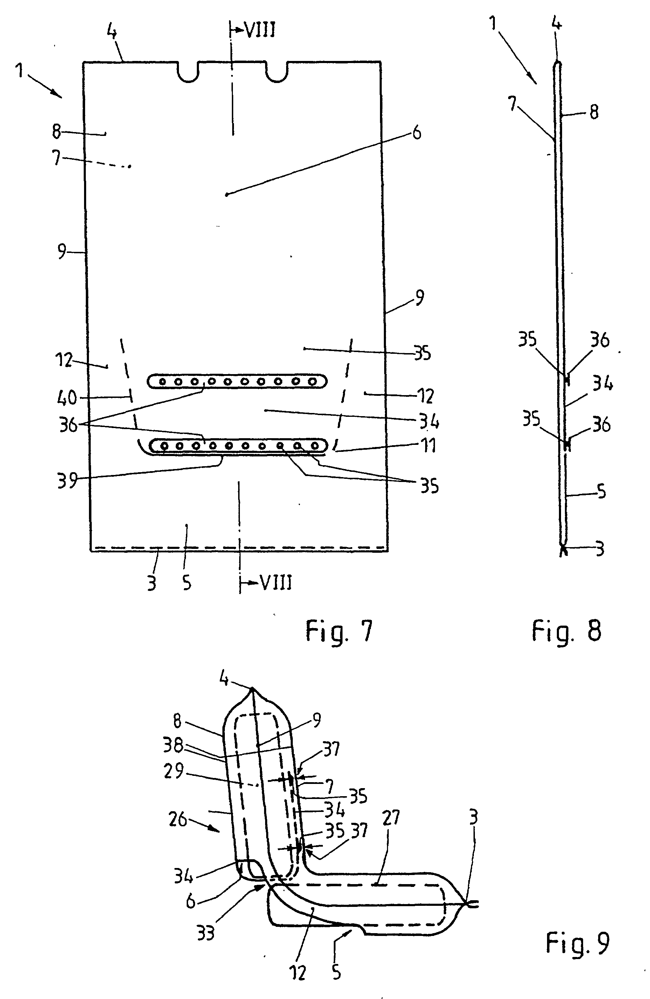

In dieser PCT-Anmeldung ist in den Fig. 8 und 9 eine weitere Ausführungsform eines Sitzbezugs dargestellt und beschrieben. Auch hier werden durch Ausschnitte zwischen den Rückenlehnentaschen und den Sitztaschen seitlich abstehende streifenförmige Fortsätze gebildet, die jedoch nicht mit einem Klebstoffauftrag versehen sind. Die Länge der Vorderlage entspricht der effektiven Länge der Rückenlehne und des Sitzpolsters. Aus der Vorderlage wird durch einen U-förmig geführten Anschnitt eine Klappe gebildet, die durch den Spalt zwischen Rückenlehne und Sitzpolster hindurchgeführt werden kann. An der Vorderlage entsteht im unteren Bereich der Rückenlehne ein entsprechend großes Loch, so dass dieser Sitzbezug keine durchgehende, die Sitzfläche und die Rückenlehnenfläche des Sitzes schützende Vorderlage mehr aufweist. Ein solcher Sitzbezug erfüllt damit seine Primärfunktion, nämlich die Rückenlehne und das Sitzpolster zu schützen, nicht mehr. Die Verschmutzung durch das großzügig bemessene Loch hindurch ist vorprogrammiert, so dass ein solcher Sitzbezug nicht brauchbar ist.

Der Erfindung liegt die Aufgabe zugrunde, einen insbesondere für Erstausrüstung geeigneten Sitzbezug aus Kunststofffolie zu schaffen, der maschinell herstellbar ist, bereits beim Sitzhersteller aufgebracht werden kann, einen Originalitätsschutz ermöglicht und gegen Verrutschen und Abziehen von dem Sitz wirksamer und vollständiger als bisher geschützt ist.

Erfindungsgemäß wird dies dadurch erreicht, dass im Bereich des Spaltes zwischen Rückenlehne und Sitzpolster an der Vorderlage ein durch eine Falte gebildeter oder dort angebrachter streifenförmiger, den Spalt mit Überstand durchsetzender Fortsatz vorgesehen ist oder an der Rücklage ein streifenförmiger, den Spalt mit Überstand durchsetzender Fortsatz gebildet oder angebracht ist, auf dem ein Klebeauftrag vorgesehen ist, der von einem abziehbaren Schutzstreifen abgedeckt ist, und dass der streifenförmige Fortsatz durch den Spalt zwischen Rückenlehne und Sitzpolster hindurchführbar und nach dem Abziehen des Schutzstreifens vermittels des Klebeauftrages mit dem Sitzbezug oder mit Teilen des Kraftfahrzeug-Sitzes verbindbar ist.

Die Erfindung geht von dem Gedanken aus, den Sitzbezug mit einem streifenförmigen Fortsatz, einer Lasche oder dgl. auszustatten, der so ausgebildet und angeordnet ist, dass er in der montierten Stellung des Sitzbezuges auf dem Kraftfahrzeugsitz durch den Spalt zwischen Rückenlehne und Sitzpolster hindurchgeführt werden kann, und zwar so, dass er diesen Spalt mit Überstand durchsetzt. Der streifenförmige Fortsatz kann aus einem Bestandteil der Vorderlage oder der Rücklage des Sitzbezuges ausgeformt sein. Es besteht auch die Möglichkeit, den streifenförmigen Fortsatz gesondert herzustellen und mit der Vorderlage oder der Rücklage des Sitzbezuges zu verbinden, beispielsweise zu verkleben. Der streifenförmige Fortsatz selbst weist jedoch weiterhin einen Klebeauftrag auf, der von einem abziehbaren Schutzstreifen abgedeckt ist. Der Klebeauftrag wird damit nach dem Abziehen des Schutzstreifens aktiviert und kann entweder auf einen anderen Teil des Sitzbezuges oder aber auf ein Teil des Kraftfahrzeug-Sitzes, beispielsweise eine Rahmenleiste oder dgl. aufgeklebt werden. Da der streifenförmige Fortsatz den Spalt zwischen Rückenlehne und Sitzpolster durchsetzt, bildet er in der verklebten Stellung mit anderen Bereichen des Sitzbezuges gleichsam eine ringförmig geschlossene Banderole, die beispielsweise das Sitzpolster oder die Rückenlehne umschließt, so dass hier ein Originalitätsschutz gegeben ist. Der Kraftfahrzeug-Sitz ist durch den aufgezogenen Sitzbezug mit verklebtem Fortsatz gleichsam versiegelt, so dass eine gewisse Gewähr dafür gegeben ist, dass der Sitzbezug seinen ordnungsgemäßen Sitz mit Schutzfunktion unverändert einnimmt und auch während des Transportes vom Sitz-Hersteller zum Kraftfahrzeug-Hersteller sowie während der Montage der Fahrzeugsitze im Fahrzeug beibehält. Wenn der streifenförmige Fortsatz mit Teilen des Kraftfahrzeug-Sitzes verklebt wird, entsteht zwar keine ringförmig geschlossene Banderole, jedoch wird der Sitzbezug in seinem Mittelbereich, also im Bereich des Spaltes zwischen Sitzpolster und Rückenlehne zusätzliche dauerhaft fixiert, wodurch der ordnungsgemäße Sitz des Sitzbezuges auf dem Kraftfahrzeugsitz verbessert wird. Die Verklebung ist so ausgebildet, dass sie zwar aufhebbar ist, wenn der Sitzbezug bewusst von dem Kraftfahrzeug-Sitz entfernt werden soll. Manipulationen bis zu diesem Zeitpunkt sind jedoch einerseits sehr zeitaufwändig oder sie hinterlassen in der Regel Spuren an dem Material der Kunststofffolie des Sitzbezuges, insbesondere Reck- und Dehnspuren. Damit ist dann jederzeit nachweisbar, dass an dem Sitzbezug gezogen oder dieser in einer sonstigen Weise manipuliert worden ist. Durch den Klebeauftrag erhält der Sitzbezug in der montierten Stellung am Kraftfahrzeug-Sitz im Bereich des Spaltes zwischen Rückenlehne und Sitzpolster einen noch strafferen ordnungsgemäßen Sitz, so dass praktisch die Möglichkeit beseitigt ist, Teile der das Sitzpolster umschließenden Tasche bewusst seitlich wegzuziehen oder zu entfernen. Der Sitzbezug lässt sich praktisch nur durch Zerstörung von dem Kraftfahrzeug-Sitz abnehmen.

Der Klebeauftrag besteht aus einem solchen Klebstoff, dessen Verklebung nur unter Hinterlassung von Spuren an dem Sitzbezug aufhebbar ist. Der Klebeauftrag kann in vielfältiger Form realisiert werden. Der verwendete Klebstoff oder das verwendete Klebematerial wird so eingestellt, dass die Klebeverbindung eine erheblich größere Kraft aufzunehmen in der Lage ist, als es z. B. für die Dehnung der Kunststofffolie erforderlich ist.

Die Vorderlage kann in dem für den Spalt zwischen Rückenlehne und Sitzpolster bestimmten Bereich eine Fixier- und Eingriffsfalte aufweisen, die zu dem streifenförmigen Fortsatz verlängert ist. Bei dieser Ausführungsform befindet sich der streifenförmige Fortsatz an der Vorderlage des Sitzbezuges. Die Vorderlage ist zur Bildung des streifenförmigen Fortsatzes noch einmal verlängert. Der Klebeauftrag an dem streifenförmigen Fortsatz kann beispielsweise mit der die Tasche für die Rückenlehne bildenden Rücklage verklebt werden. Aber auch eine Verklebung mit der die Tasche für das Sitzpolster bildenden Rücklage ist möglich, sofern dies die Konstruktion des Kraftfahrzeug-Sitzes zulässt.

Eine andere Möglichkeit besteht darin, dass die die Rückenlehnentasche mitbildende Rücklage zur Bildung des streifenförmigen Fortsatzes verlängert ist. In diesem Falle ist der streifenförmige Fortsatz aus dem Material der Rücklage gebildet und kann von hinten nach vorn durch den Spalt zwischen dem Sitzpolster und der Rückenlehne hindurchgeführt werden. Je nach der Anordnung und Ausbildung des Klebeauftrages kann der Fortsatz dann mit der Vorderlage im Bereich des Sitzpolsters oder im Bereich der Rückenlehne verklebt werden.

Für die Realisierung des Klebeauftrages ergeben sich mehrere Möglichkeiten. Der Klebeauftrag kann streifen- oder punktförmig ausgebildet sein und sich zumindest im Mittelbereich des Kraftfahrzeug-Sitzes in Richtung der Breite des Sitzbezuges erstrecken. Der Klebeauftrag erstreckt sich über eine gewisse Breite des Sitzes, und zwar vorzugsweise im Mittelbereich zwischen den die Rückenlehne tragenden Gelenken. Der streifenförmige Klebeauftrag kann aus einem durchgehenden Streifen bestehen oder auch aus Streifenabschnitten erstellt sein, die zueinander beabstandet angeordnet sind. Auch in Form einzelner nebeneinander angeordneter Punkte lässt sich der Klebeauftrag realisieren. Der damit in Wirkverbindung tretende Schutzstreifen ist zweckmäßig durchgehend ausgebildet und angeordnet, so dass er ergriffen und zusammenhängend abgezogen werden kann. Eine andere Möglichkeit besteht darin, dass der Klebeauftrag als Etikett ausgebildet ist, das auf den Fortsatz aufgeklebt ist. In diesem Falle weist der Grundkörper des Etiketts einen doppelseitigen Klebeauftrag auf, mit dem er einerseits auf die Vorderlage oder die Rücklage des Sitzbezuges an der entsprechenden Stelle aufgeklebt wird. Auch hier ist der nach außen gekehrte Klebeauftrag mit einem Schutzstreifen abgedeckt. Der Klebeauftrag kann aber auch aus Schmelzkleber bestehen.

Die die Rückenlehnentasche mitbildende Rücklage kann vermittels des Klebeauftrages mit der Fixier- und Eingriffsfalte verbindbar sein. Besonders einfach ist es, wenn der Fortsatz aus dem Material der Rückenlehnentasche ausgeschnitten wird, so daß sein Klebeauftrag dann mit der Fixier- und Eingriffsfalte verbindbar ist. Auch in diesem Falle wird eine geschlossene ringförmige Banderole als Originalitätsschutz um die Rückenlehne gebildet.

Der Klebeauftrag kann auf der Unterseite des an der Vorderlage vorgesehenen Fortsatzes oder der Oberseite des an der Rücklage vorgesehenen Fortsatzes angeordnet sein. Die Anordnung richtet sich nach der Stelle, an der die Verklebung stattfinden soll. Sinnvoll ist es, wenn der Klebeauftrag an dem freien Rand des Fortsatzes angeordnet ist.

Die Erfindung wird anhand bevorzugter Ausführungsbeispiele weiter erläutert und beschrieben. Es zeigen:
- Fig. 1: eine Draufsicht auf eine Bahn aus aneinanderhängenden Sitzbezügen vor dem Aufwickeln auf eine Rolle,
- Fig. 2: eine Draufsicht auf die oberste Lage des Sitzbezuges gemäß Fig. 1,
- Fig. 3: eine Draufsicht auf die zweitoberste Lage des Sitzbezuges gemäß Fig. 1,
- Fig. 4: eine Draufsicht auf die drittoberste Lage des Sitzbezuges gemäß Fig. 1,
- Fig. 5: eine Draufsicht auf die unterste Lage des Sitzbezuges gemäß Fig. 1,
- Fig. 6: eine Seitenansicht des Sitzbezuges gemäß Fig. 1 an einem Kraftfahrzeug-Sitz,
- Fig. 7: eine Draufsicht auf die Rückseite bei einer zweiten Ausführungsform des Sitzbezuges,
- Fig. 8: einen Schnitt gemäß der Linie VIII - VIII in Fig. 7,
- Fig. 9: eine Seitenansicht des Sitzbezuges gemäß Fig. 7 an einem Kraftfahrzeug-Sitz,
- Fig. 10: eine Draufsicht auf die Rückseite bei einer dritten Ausführungsform des Sitzbezuges,
- Fig. 11: einen Schnitt gemäß der Linie XI - XI in Fig. 10,
- Fig. 12: eine Seitenansicht eines Kraftfahrzeug-Sitzes mit dem übergestülpten und verklebten Sitzbezug gemäß Fig. 10,
- Fig. 13: eine Draufsicht auf die Rückseite bei einer vierten Ausführungsform des Sitzbezuges,
- Fig. 14: einen Schnitt gemäß der Linie XIV - XIV in Fig. 13, und
- Fig. 15: eine Seitenansicht des Sitzbezuges gemäß Fig. 13 an einem Kraftfahrzeug-Sitz.

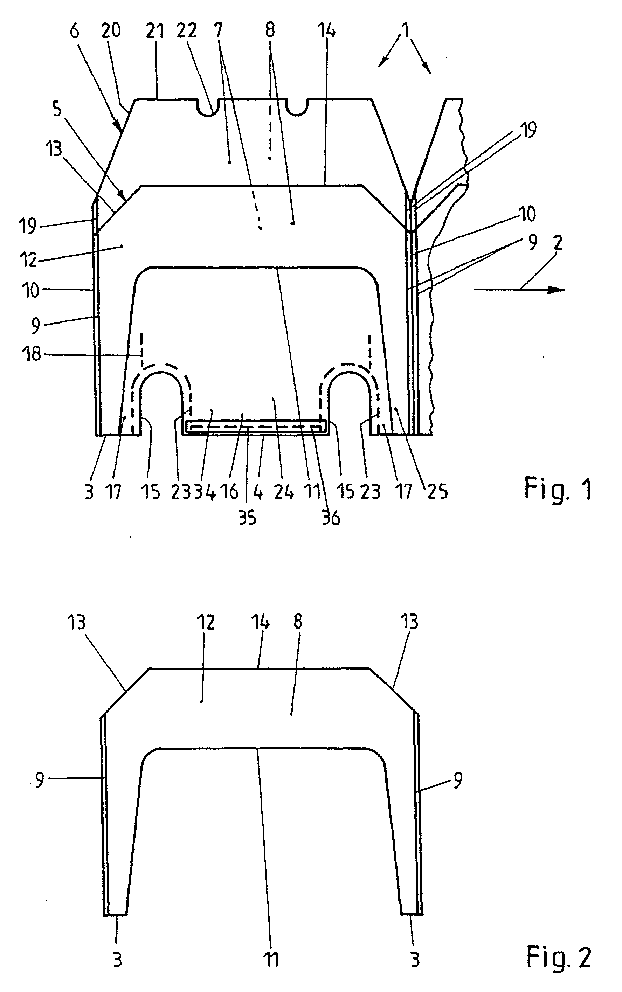

Der in Fig. 1 dargestellte Sitzbezug 1 wird bahnenförmig hergestellt, und zwar ausgehend von einer doppellagigen Kunststofffolie. Die Förderrichtung der so geförderten und bearbeiteten Bahn ist durch einen Pfeil 2 gekennzeichnet. Es versteht sich, daß nach der Bearbeitung die einzelnen Sitzbezüge 1 aneinanderhängen und zu einer Rolle aufgewickelt werden können, obwohl in Fig. 1 nur ein vollständiger Sitzbezug und ein Teil eines weiteren benachbarten Sitzbezuges dargestellt ist. Die gemäß Pfeil 2 geförderte Bahn ist in weiten Bereichen vierlagig, wobei die einzelnen Bahnen gemäß den Fig. 2 bis 5 in ihrer Reihenfolge nacheinander einzeln dargestellt sind. Die Sitzbezüge 1 können auch vollständig voneinander getrennt und stapelweise aufgesammelt werden.

Durch den Längsschnitt an einem Schlauch in Richtung des Pfeiles 2 entstehen zwei freie Ränder 3 und 4. Der Schlauch wird über weite Bereiche vierlagig so zusammengefaltet und zusammengeführt, daß sich die beiden freien Ränder 3 und 4 an der obersten und untersten Lage decken und dazwischen zwei Falten verlaufen, deren Höhe sich jeweils nach der Höhe einer Sitztasche 5 und einer Rückenlehnentasche 6 richtet. Jede Tasche wird von zwei Bahnen gebildet, wobei die beiden mittleren Bahnen eine durchgehende Vorderlage 7 bilden, während die oberste und unterste Bahn mit ihren freien Rändern 3 und 4 gleichsam Bestandteile einer Rücklage 8 sind. Es ist aber auch möglich, statt Bildung einer durchgehenden Vorderlage 7 und zwei die Rücklage 8 bildenden Bahnbereichen die Sitzbezüge 1 aus vier begrenzten Bahnen zusammenzuführen, wie sie anhand der Fig. 2 bis 5 im Einzelnen dargestellt sind. Vorteilhafter ist es jedoch, von einem der Länge nach aufgeschnittenen Schlauch auszugehen und durch zusätzliche Längsfaltung ohne Spreizung eine Vorderlage 7 und eine Rücklage 8 zu nutzen. Zur Bildung der Sitztasche 5 wird der entsprechende Teil der Vorderlage 7 mit dem entsprechenden Teil der Rücklage 8 durch Querschweißungen 9 verbunden, wie dies anhand der Fig. 1 bis 3 erkennbar ist. Diese Querschweißungen 9 erstrecken sich quer zur Förderrichtung gemäß Pfeil 2 und verbinden nur die beiden obersten Bahnen zur Bildung der Sitztasche 5. Benachbarte Querschweißungen 9 aneinanderhängender Sitzbezüge 1 sind durch eine durchtrennbare Perforation 10 gehalten, um die Bahn auf eine Rolle aufzuwickeln. Diese Perforation 10 wird jeweils durchtrennt, um einen Sitzbezug 1 von der Rolle abzunehmen und über einen Kraftfahrzeug-Sitz überzuziehen. Für den Fall, daß die Sitzbezüge 1 stapelweise angewendet werden sollen, sind die Perforationen 10 durch entsprechende Schnitte ersetzt.

Wie aus Fig. 2 ersichtlich ist, wird die Unterseite der Sitztasche 5 unter Mitwirkung der Bahn der Rücklage 8 gebildet, die eine U-förmig geführte Ausstanzung 11 aufweist, die in ihrem mittleren Bereich parallel und mit Abstand zum Rand 3 geführt ist und beidendig in den Rand 3 ausläuft, so daß aus der Rücklage 8 ein Schutzstreifen 12 als Bestandteil der Sitztasche 5 gebildet wird. Auf der dem freien Rand 3 gegenüberliegenden Seite können abgeschrägte Ecken 13 durch Trennschweißungen gebildet sein.

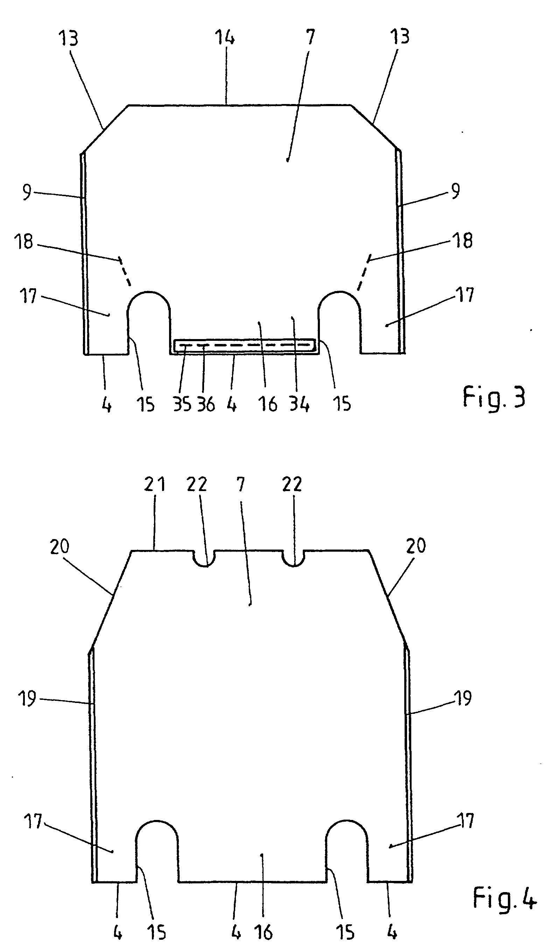

Die gesamte Sitztasche 5 wird aus dem in Fig. 2 dargestellten Teil der Rücklage 8 und dem in Fig. 3 dargestellten Teil der Vorderlage 7 gebildet, wobei die Querschweißungen 9, über die die beiden Teile verbunden werden, angedeutet sind. Die abgeschrägten Ecken 13 ergeben sich somit auch an dem Teil der Vorderlage 7. Die freien Ränder 3 und 4 sind unverbunden. Auf der gegenüberliegenden Seite besteht eine Verbindung im Bereich des Randes 14, der entweder durch eine Umfaltlinie des Ausgangsschlauches oder durch eine Trennschweißung erzeugt bzw. verbunden ist. Der in Fig. 3 dargestellte Teil der Vorderlage 7 weist im Bereich des Randes 4 zwei Trennschweißungen 15 auf, deren linienförmige Gestaltung von dem freien Rand 4 ausgeht und in diesen zurückgeführt ist. Die Trennschweißungen 15 sind mit Abstand zu den Querschweißungen 9 bzw. Perforationen 10 angeordnet. Die Trennschweißungen 15 verbinden entlang der gezeigten Linienführung die in den Fig. 3 und 4 insgesamt dargestellten Bereiche der Vorderlage 7 miteinander. Die Tiefe der Trennschweißungen 15 entspricht etwa dem Maß, um welches die Vorderlage 7 insgesamt länger ist als die wirksame zu bedeckende Länge der Rückenlehnenfläche und der Sitzfläche. Auf diese Art und Weise wird durch diesen an sich überschüssigen Bereich der Vorderlage 7 zwischen den beiden Trennschweißungen 15 eine Fixier- und Eingriffsfalte 16 gebildet, die der Verankerung des Sitzbezuges 1 in der am Sitz übergestülpten Stellung in dem Spalt zwischen Sitzpolster und Rückenlehne dient. Gleichzeitig werden durch die Trennschweißungen 15 aus dem überschüssigen Material in Richtung auf die Querschweißungen 9 Schutzelemente 17 gebildet, also doppellagige Folienbereiche, die entlang der Trennschweißungen 15 und des freien Randes 4 miteinander in Verbindung stehen, nicht aber nach außen. Diese Schutzelemente dienen der Abdeckung von Gelenkbereichen des Sitzes, also Bereichen zwischen Rückenlehne und Sitzpolster außen. Sie können auch in Fortfall kommen.

Der in Fig. 3 dargestellte Teil der Sitztasche 5 weist seitlich und benachbart zu den Trennschweißungen 15 je eine Perforationsstrecke 18 auf, von denen je nach Anordnung des Kraftfahrzeug-Sitzes die eine oder andere durchtrennt und die Gurtpeitsche hindurchgeführt werden kann, während die jeweils andere Perforationsstrecke 18 geschlossen bleibt.

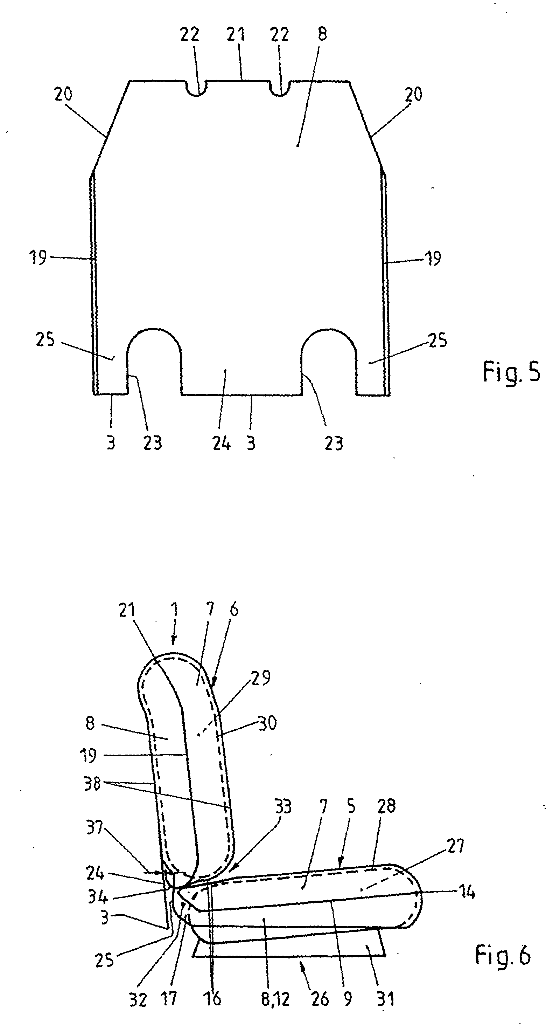

Die Rückenlehnentasche 6 wird aus den beiden Folien gebildet, die in Fig. 4 und 5 dargestellt sind, nämlich aus einem Teil der Vorderlage 7 und einem Teil der Rücklage 8. Diese beiden Folienbereiche sind quer zur Laufrichtung gemäß Pfeil 2 durch Querschweißungen 19 miteinander verbunden. Auch die Rückenlehnentasche 6 kann abgeschrägte Ecken 20 aufweisen, die durch Trennschweißungen gebildet sind. Auch im Bereich dieser abgeschrägten Ecken 20 sowie im Bereich des gemeinsamen Randes 21 sind die Bereiche der Vorderlage 7 und der Rücklage 8 miteinander verbunden, so daß auch die Rückenlehnentasche 6 U-förmig geschlossen ist, während sie nur von der Seite der freien, unverbundenen Ränder 3 und 4 her offen, d. h. überziehbar über den Sitz, ausgebildet ist. Der Rand 21 kann durch Faltlinien des geschlitzten Schlauches in Längsrichtung oder aber durch eine Trenn- oder Verbindungsschweißung gebildet sein. Im Bereich des Randes 21 können Ausnehmungen 22 für die Durchführung der Verankerungsstangen von Kopfstützen des Sitzes vorgesehen sein. Es ist andererseits aber auch möglich, den Rand 21 und die abgeschrägten Ecken 20 so zu führen, daß in der Rückenlehnentasche 6 auch integrierte Kopfstützen aufgenommen werden können. Die Rückenlehnentasche 6 besitzt in der Regel ohnehin eine größere Tiefe als die Sitztasche 5, wie insbesondere aus Fig. 1 ersichtlich ist.

Fig. 5 läßt erkennen, daß der Bereich der Rücklage 8, der die Rückenlehnentasche 6 mitbildet, von seinem freien Rand 3 ausgehende Ausstanzungen 23 oder durchtrennbare Perforationen aufweist, die in ihrer Form den Trennschweißungen 15 derart angepaßt sein können, daß die Linienführung der Ausstanzungen 23 die Linienführung der Trennschweißungen 15 gleichsam mit Abstand umgibt (vgl. Fig. 1). Diese Gestaltung zielt auf eine vereinfachte Herstellung hin. Durch die Formgebung und Anordnung der Ausstanzungen 23 und 11 werden trotz vierlagiger Bahn die beiden Bereiche der Vorderlage 7 gemäß den Fig. 3 und 4 für die Anbringung der Trennschweißungen 15 von beiden Seiten her zugänglich. Wie Fig. 5 in Verbindung mit Fig. 1 erkennen läßt, ist die Tiefe der Rückenlehnentasche 6 gegenüber dem Stand der Technik vergleichsweise vergrößert bzw. verlängert. Zwischen den Ausstanzungen 23 wird ein Schutzvorhang 24 gebildet, der in der übergestülpten Stellung des Sitzbezuges 1 am Sitz den rückwärtigen Teil des Sitzpolsters abdeckt und schützt. Durch die Ausstanzungen 23 werden ansonsten Schutzlappen 25 gebildet, die den hinteren Gelenkbereich des Sitzes schützend umgeben.

Wie insbesondere die Figuren 1 und 3 erkennen lassen, ist die Vorderlage 7 nicht nur zur Bildung der Fixier- und Eingriffsfalte 16 ausgebildet. Die Vorderlage 7 bildet zugleich einen streifenförmigen Fortsatz 34, auf dessen Unterseite ein Klebeauftrag 35 angeordnet ist, der durch einen abziehbaren Schutzstreifen 36 abgedeckt ist. Der Klebeauftrag 35 erstreckt sich hier, wie dargestellt, über die Breite der Fixier- und Eingriffsfalte 16. Er kann aus herstellungstechnischen Gründen auch durchlaufend vorgesehen sein, sich also auch im Bereich der Schutzelemente 17 erstrecken, obwohl er dort in der Regel keine Funktion erfüllt. Der Klebeauftrag 35 kann ebenfalls durchgehend oder streifenförmig abschnittweise oder in anderer Weise ausgebildet sein. Es handelt sich um einen Klebeauftrag, der nach dem Abziehen des Schutzstreifens 36 eine sehr intensive Klebewirkung herbeiführt, die normalerweise ohne Zerstörung des Sitzbezuges 1 nach erfolgter Verklebung nicht mehr gelöst werden kann. Der streifenförmige Fortsatz 34 kann von der Fixier- und Eingriffsfalte 16 gleichzeitig gebildet werden, ohne daß zusätzliches Folienmaterial eingesetzt würde. Es ist aber sinnvoller, den streifenförmigen Fortsatz 34 etwas länger zu gestalten, als es die Länge der Fixier- und Eingriffsfalte 16 erfordert, wenn diese in den Spalt 33 zwischen Sitzpolster 27 und Rückenlehne 29 eingeführt wird.

Fig. 6 zeigt den Sitzbezug 1 gemäß den Fig. 1 bis 5 in seiner Stellung übergestülpt an einem Kraftfahrzeug-Sitz 26. Der Sitz 26 weist ein Sitzpolster 27 mit Sitzfläche 28 auf. Es ist eine Rückenlehne 29 vorgesehen, die dem Rücken des Benutzers zugekehrt eine Rückenlehnenfläche 30 besitzt. Der Sitz 26 besitzt ansonsten ein Untergestell 31 zur Verankerung im Kraftfahrzeug. Die Rückenlehne 29 ist mit dem Untergestell 31 bzw. an dem Sitzpolster 27 durch Gelenkbereiche 32 in bekannter Weise schwenkbar verbunden, um verschiedene Neigungen der Rückenlehne 29 einstellen zu können. Zwischen dem zu Sitzzwecken nicht nutzbaren Teil der Sitzfläche 28 und dem betreffenden Teil der Rückenlehne 29 ist ein Spalt 33 vorhanden, in den hinein die Fixier- und Eingriffsfalte 16 entweder von Hand oder mit Hilfe eines Werkzeuges eingeschoben wird, nachdem die Rückenlehnentasche 6 und die Sitztasche 5 über die betreffenden Teile des Sitzes gestülpt worden sind. Man erkennt die Querschweißungen 9 und 19 und die Lage des Schutzstreifens 12, der gleichsam die Seitenbereiche und untere Bereiche des Sitzpolsters 27 schützend umgibt.

Fig. 6 läßt auch erkennen, wie die Fixier- und Eingriffsfalte 16 durch den Spalt 33 an dem Sitz 26 von vorn nach hinten hindurchgeführt wird. Sodann wird der Schutzstreifen 36 abgezogen und das Ende des Fortsatzes 34 mit dem Schutzvorhang 24 der Rücklage 8 verklebt. Dabei wird eine durch Pfeildarstellung verdeutlichte kraftschlüssige Verbindungsstelle 37 geschaffen, die ohne Zerstörung des Sitzbezuges 1 nicht mehr lösbar ist. Es ist erkennbar, wie durch die Verklebung an der Verbindungsstelle 37 aus Teilen des Sitzbezuges 1 gleichsam eine ringförmig geschlossene Banderole 38 geschaffen wird, die die Rückenlehne 29 umschließt und als Qualitätsversiegelung für den Sitz 26 dient. Gleichzeitig sorgt der Klebeauftrag 34 an der Verbindungsstelle 37 zusätzlich noch dafür, daß der Sitzbezug 1 in der auf den Sitz 26 aufgesetzten Stellung im Bereich des Spaltes 33 noch straffer und unverrückbarer gehalten wird. Jegliches Ziehen an der Sitztasche 5 führt dazu, daß sich die Kunststoffolie dehnt, also bleibend verformt, so daß derartige Manipulationen, sofern sie denn stattfinden, leicht nachweisbar sind. Fig. 6 läßt auch erkennen, daß der Schutzvorhang 24 nach unten herabhängt und damit seine Schutzfunktion für den rückwärtigen Bereich des Sitzpolsters 27 nach wie vor erfüllt. Es ist auch bereits vorstellbar, daß der Klebstoffauftrag 34 an einem noch länger gestalteten Fortsatz 34 vorgesehen sein könnte, und zwar auf seiner Oberseite, wobei die Länge dieses Fortsatzes 34 so gewählt werden könnte, daß die Verbindungsstelle 37 im rückwärtigen Bereich des Untergestells 31 gebildet wird. In diesem Falle werden also nicht Teile des Sitzbezuges 1 miteinander verklebt, sondern der Fortsatz 34 wird an dem Untergestell 31 angeklebt. Auch damit ergibt sich aber eine Ausstraffung des Sitzbezuges 1 im Bereich des Spaltes 33 und auch eine gewisse Versiegelungswirkung bzw. ein Originalitätsschutz. Ähnliches ist denkbar bzw. vorstellbar, wenn der Schutzvorhang 24 verlängert wird und somit den Fortsatz 34 bildet. Dessen freies Ende könnte mit einem Klebstoffauftrag 34 versehen sein, der ebenfalls an dem rückwärtigen Teil des Untergestells 31 angeklebt werden könnte.

In den Figuren 7 bis 9 ist eine weitere Ausführungsform des Sitzbezuges 1 dargestellt, die auch hier aus der Vorderlage 7 und einer Rücklage 8 gebildet ist, die an den Rändern 3 und 4 sowie seitlich durch Querschweißungen 19 miteinander verbunden sind. Im mittleren Bereich der Rücklage 8, also etwa dort, wo der Spalt 33 (Fig. 9) zwischen Sitzpolster 27 und Rückenlehne 29 angeordnet ist, ist ein streifenförmiger Fortsatz 34 teils durch einen U-förmigen Schnitt 39, teils durch eine Perforation 40 vorgebildet. Auf der Außenseite dieses streifenförmigen Fortsatzes 34 sind an zwei Stellen je eine Reihe punktförmiger Klebeaufträge 35 vorgesehen, die jeweils durch einen Schutzstreifen 36 abgedeckt sind. Aus Fig. 9 ist erkennbar, daß der Spalt 33 zwischen Sitzpolster 27 und Rückenlehne 29 mehrere cm beträgt und insoweit eine Klemmwirkung nicht entfalten kann. Hierdurch wird es aber sinnvoll möglich, nach dem Überstülpen des Sitzbezuges 1 über den Sitz 26 die beiden Schutzstreifen 36 zu lösen und den streifenförmigen Fortsatz 34 durch den Spalt 33 von hinten nach vorne und in die Rückenlehnentasche 6 so hineinzufalten, daß die Verbindungsstellen 37 gebildet werden können. Auch hierbei entsteht eine ringförmig die Rückenlehne 29 umschließende Banderole 38. Es versteht sich, daß der streifenförmige Fortsatz 34 auch vergleichsweise kürzer gestaltet werden könnte, so daß nur eine kraftschlüssige Verbindungsstelle 37 gebildet wird.

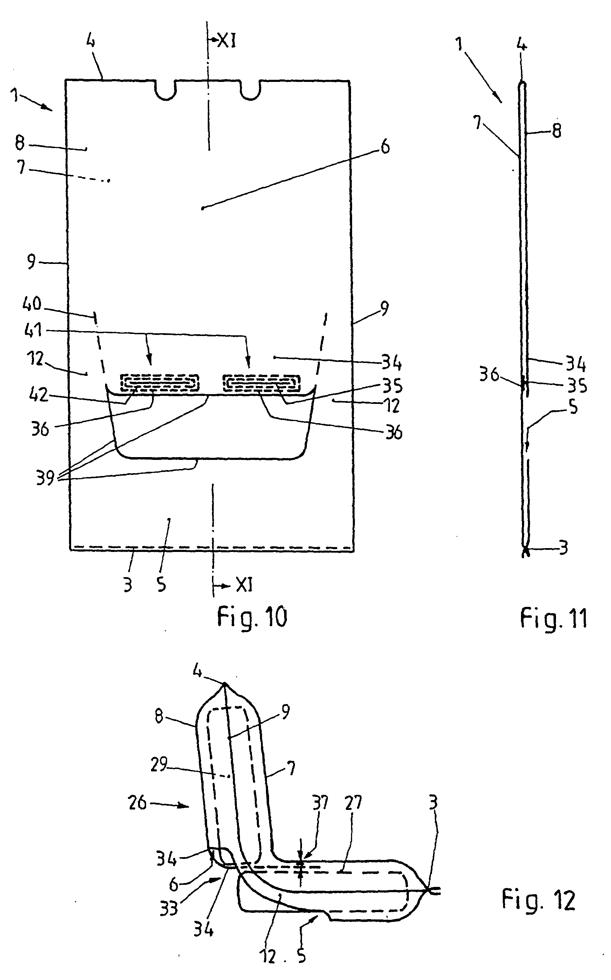

Ähnlich dazu ist das Ausführungsbeispiel der Figuren 10 bis 12 gestaltet. Hier ist der streifenförmige Fortsatz 34 kurz gestaltet, indem durch den Schnitt 39 eine Ausstanzung gebildet ist. Auf die innen liegende Oberseite des Fortsatzes 34 sind zwei Etiketten 41 aufgesetzt, die jeweils einen Grundkörper 42 aufweisen, der auf das Material des Fortsatzes 34 aufgeklebt ist. Auf der anderen Seite des Grundkörpers 42 ist der Klebeauftrag 35 aufgebracht, der durch den Schutzstreifen 36 abgedeckt ist. Der Grundkörper 42 des Etiketts 41 besitzt also auf jeder Seite eine klebende Beschichtung. Mit der einen Seite ist er auf das Material des streifenförmigen Fortsatzes 34 aufgeklebt. Die andere Seite ist über den Schutzstreifen 36 abgedeckt.

Fig. 12 läßt erkennen, daß der Spalt 33 auch hier recht breit ausgebildet ist und eine Einklemmwirkung über ihn nicht erzielt werden kann. Nach dem Überstülpen des Sitzbezuges 1 über den Kraftfahrzeug-Sitz 26 wird der Schutzstreifen 36 im Bereich beider Etiketten 41 gelöst und der Fortsatz 34 von hinten nach vorn durch den Spalt 33 hindurchgeführt, so daß er mit der Innenseite der Vorderlage 7 im Bereich des Sitzpolsters 27 verklebt werden kann. Es wird hier die Verbindungsstelle 37 gebildet.

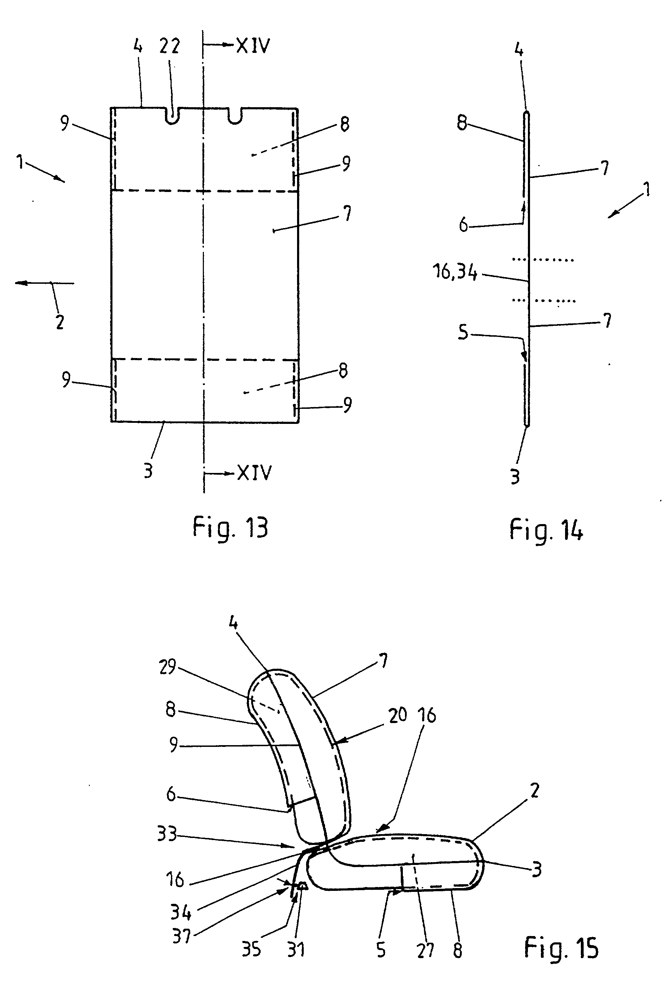

In den Figuren 13 bis 15 ist schließlich ein viertes Ausführungsbeispiel des Schutzbezuges 1 dargestellt, und zwar mit Draufsicht auf die Vorderlage 7, die durchgehend vorgesehen ist. Die Rücklage 8 ist nur in zwei Stücken angeordnet, so daß einerseits eine Sitztasche 5 und andererseits eine Rückenlehnentasche 6 gebildet wird. Die Vorderlage 7 ist im Mittelbereich vergleichsweise länger gestaltet. Sie bildet hier nicht nur die Fixier- und Eingriffsfalte 16, sondern ist darüberhinaus noch doppellagig zur Bildung eines streifenförmigen Fortsatzes 34 verlängert, der den Spalt 33 unter Übermaß durchdringt und so lange gestaltet ist, daß die Verbindungsstelle 37 an einem Querträger des Untergestells 31 des Fahrzeugsitzes 26 angeordnet werden kann. Damit wird zwar keine ringförmig geschlossene Banderole gebildet, es tritt aber auch ein Originalitätsschutz und eine Versiegelung des Kraftfahrzeugsitzes ein. Der Sitzbezug 1 wird im Bereich des Spaltes 33 verstärkt und ausgestrafft gehalten, so daß ein Verrutschen des Sitzbezuges insbesondere im Bereich der Sitztasche 5 weder durch die umfangreiche Beanspruchung des Sitzes während der Montage des Kraftfahrzeuges noch mutwillig herbeigeführt werden kann ohne daß dies Spuren an dem Sitzbezug 1 hinterläßt. Es ist also ohne weiteres feststellbar, ob ein Sitzbezug 1 manipuliert worden ist oder nicht.

### BEZUGSZEICHENLISTE

- 1 -: Sitzbezug
- 2 -: Pfeil
- 3 -: Rand
- 4 -: Rand
- 5 -: Sitztasche
- 6 -: Rückenlehnentasche

- 7 -: Vorderlage
- 8 -: Rücklage
- 9 -: Querschweißung
- 10 -: Perforation

- 11 -: Ausstanzung
- 12 -: Schutzstreifen
- 13 -: Ecke
- 14 -: Rand
- 15 -: Trennschweißung
- 16 -: Fixier- und Eingriffsfalte

- 17 -: Schutzelement
- 18 -: Perforationsstrecke
- 19 -: Querschweißung
- 20 -: Ecke

- 21 -: Rand
- 22 -: Ausnehmung
- 23 -: Ausstanzung
- 24 -: Schutzvorhang
- 25 -: Schutzlappen
- 26 -: Sitz
- 27 -: Sitzpolster
- 28 -: Sitzfläche
- 29 -: Rückenlehne
- 30 -: Rückenlehnenfläche

- 31 -: Untergestell
- 32 -: Gelenkbereich
- 33 -: Spalt
- 34 -: Fortsatz
- 35 -: Klebeauftrag
- 36 -: Schutzstreifen
- 37 -: Verbindungsstelle
- 38 -: Banderole
- 39 -: Schnitt
- 40 -: Perforation

- 41 -: Etikett
- 42 -: Grundkörper

## Patentansprüche

1. Sitzbezug (1) zum Schutz eines Kraftfahrzeug-Sitzes (26) aus einem doppellagigen Teil aus Kunststoffolie, insbesondere für die Erstausstattung, mit einer durchgehenden, die Sitzfläche (28) und die Rückenlehnenfläche (30) des Sitzes (26) schützenden Vorderlage (7) und einer mit der Vorderlage durch Querschweißungen (9, 19) verbundenen Rücklage (8), die in Verbindung mit der Vorderlage (7) eine die Rückenlehne (29) des Sitzes (26) zumindest teilweise aufnehmende Rückenlehnentasche (6) und eine das Sitzpolster (27) zumindest teilweise umschließende Sitztasche (5) bildet, **dadurch gekennzeichnet, dass** im Bereich des Spaltes (33) zwischen Rückenlehne (29) und Sitzpolster (27) an der Vorderlage (7) ein durch eine Falte gebildeter oder dort angebrachter streifenförmiger, den Spalt (33) mit Überstand durchsetzender Fortsatz (34) vorgesehen ist oder an der Rücklage (8) ein streifenförmiger, den Spalt (33) mit Überstand durchsetzender Fortsatz (34) gebildet oder angebracht ist, auf dem ein Klebeauftrag (35) vorgesehen ist, der von einem abziehbaren Schutzstreifen (36) abgedeckt ist, und dass der streifenförmige Fortsatz (34) durch den Spalt (33) zwischen Rückenlehne (29) und Sitzpolster (27) hindurchführbar und nach dem Abziehen des Schutzstreifens (36) vermittels des Klebeauftrages (35) mit dem Sitzbezug (1) oder mit Teilen des Kraftfahrzeug-Sitzes (26) verbindbar ist.

2. Sitzbezug nach Anspruch 1, **dadurch gekennzeichnet, dass** der Klebeauftrag (35) aus einem solchen Klebstoff besteht, dessen Verklebung nur unter Hinterlassung von Spuren an dem Sitzbezug (1) aufhebbar ist.

3. Sitzbezug nach Anspruch 1 oder 2, **dadurch gekennzeichnet, dass** die Vorderlage (7) in dem für den Spalt (33) zwischen Rückenlehne (29) und Sitzpolster (27) bestimmten Bereich eine Fixier- und Eingriffsfalte (16) aufweist, die zu dem streifenförmigen Fortsatz (34) verlängert ist.

4. Sitzbezug nach Anspruch 1 oder 2, **dadurch gekennzeichnet, dass** die die Rückenlehnentasche (6) mitbildende Rücklage (8) zur Bildung des streifenförmigen Fortsatzes (34) verlängert ist.

5. Sitzbezug nach Anspruch 3 oder 4, **dadurch gekennzeichnet, dass** der Klebeauftrag (35) streifen- oder punktförmig ausgebildet ist und sich zumindest im Mittelbereich des Kraftfahrzeug-Sitzes (26) in Richtung der Breite des Sitzbezuges (1) erstreckt.

6. Sitzbezug nach Anspruch 3 oder 4, **dadurch gekennzeichnet, dass** der Klebeauftrag (35) als Etikett (41) ausgebildet ist, das auf den Fortsatz (34) aufgeklebt ist.

7. Sitzbezug nach Anspruch 3 oder 4, **dadurch gekennzeichnet, dass** der Klebeauftrag (35) aus Schmelzkleber besteht.

8. Sitzbezug nach Anspruch 4, **dadurch gekennzeichnet, dass** die die Rückenlehnentasche (6) mitbildende Rücklage (8) vermittels des Klebeauftrages (35) mit der Fixier- und Eingriffsfalte (16) verbindbar ist.

9. Sitzbezug nach einem der Ansprüche 1 bis 8, **dadurch gekennzeichnet, dass** der Klebeauftrag (35) auf der Unterseite des an der Vorderlage (7) vorgesehenen Fortsatzes (34) oder der Oberseite des an der Rücklage (8) vorgesehenen Fortsatzes (34) angeordnet ist.

10. Sitzbezug nach einem der Ansprüche 1 bis 9, **dadurch gekennzeichnet, dass** der Klebeauftrag (35) an dem freien Rand des Fortsatzes (34) angeordnet ist.

## Claims

1. A temporary seat cover (1) for protecting a motor vehicle seat (26) out of a double layered part of plastic film, especially for the vehicle production industry, including a front layer (7) extending along and protecting the seating (28) and the backrest surface (30) of the seat (26) and a rear layer (8) being connected to the front layer by transverse welding seams (9, 19), the front layer (7) and the rear layer (8) forming a backrest pocket (6) for the reception of at least a portion of the backrest (29) of the seat (26) and forming a seat pocket (5) for the reception of at least a portion of the seat cushion (27), **characterised in that** a strip-shaped extension (34) in the region of the gap (33) between the backrest (29) and the seat cushion (27) being formed by a fold or being attached is connected to the front layer (7) or the rear layer (8) and being designed and arranged to be moved with excess through the gap (33) being located between the seat cushion (27) and the backrest (29), that a glue film (35) is arranged on the strip-shaped extension and being covered by a removable cover strip (36), and that the strip-shaped extension (34) after being moved through the gap (33) being located between the seat cushion (27) and the backrest (29) and after removal of the cover strip (36) is connectable with the seat cover (1) or with parts of the vehicle seat (26) by the glue film (35).

2. The seat cover of claim 1, **characterised in that** the glue film (35) includes a glue having an adhesive force being great enough to cause a deformation of the plastic film of the seat cover (1) during disconnecting.

3. The seat cover of claim 1 or 2, **characterised in that** the front layer (7) includes a fixing fold (16) being extended to the strip-shaped extension (34) and being designed and arranged to be located in the region of the gap (33) between the backrest (29) and the seat cushion (27).

4. The seat cover of claim 1 or 2, **characterised in that** the rear layer (8) forming the backrest pocket (6) is extended to the strip-shaped extension (34).

5. The seat cover of claim 3 or 4, **characterised in that** the glue film (35) has a strip-like or punctual shape and it is arranged to extend at least from a longitudinal centre plane of the vehicle seat (26) in a direction of the width of the seat cover (1).

6. The seat cover of claim 3 or 4, **characterised in that** the glue film (35) is formed as a tag (41) being glued to the strip-shaped extension (34).

7. The seat cover of claim 3 or 4, **characterised in that** the glue film (35) includes a hotmelt glue.

8. The seat cover of claim 4, **characterised in that** the rear layer (8) forming the backrest pocket (6) is designed and arranged to be connected to the fixing fold (16) by the glue film (35).

9. The seat cover of one of the claims 1 to 8, **characterised in that** the glue film (35) is arranged on the bottom side of the strip-shaped extension (34) being attached to the front layer (7) or on the top side of the strip-shaped extension (34) being attached to the rear layer (8).

10. The seat cover of one of the claims 1 to 9, **characterised in that** the glue film (35) is arranged at the free rim of the strip-shaped extension (34).

## Revendications

1. Revêtement de siège (1) pour protéger un siège de véhicule automobile (26) constitué d'une partie à double couche d'une feuille plastique, en particulier pour le premier équipement, comportant une couche avant (7) continue, protégeant la surface d'assise (28) et la surface du dossier (30) du siège (26), ainsi qu'une couche arrière (8) assemblée à la couche avant par des soudures transversales (9, 19), laquelle forme, en combinaison avec la couche avant (7), une poche de dossier (6) recevant au moins en partie le dossier (29) du siège (26), et une poche de siège (5) enfermant au moins en partie le rembourrage de siège (27), **caractérisé en ce que** dans la zone de la fente (33) entre le dossier (29) et le rembourrage de siège (27), il est prévu, sur la couche avant (7), un prolongement (34) formé par un pli ou en forme de bande, placé à cet endroit, traversant la fente (33) avec un débordement, ou il est formé ou placé sur la couche arrière (8) un prolongement (34) en forme de bande, traversant la fente (33) avec un débordement, sur lequel est prévue une couche de colle (35) qui est recouverte par une bande de protection (36) pouvant être enlevée, et **en ce que** le prolongement (34) en forme de bande peut être passé à travers la fente (33) entre le dossier (29) et le rembourrage de siège (27), et après enlèvement de la bande de protection (36), il peut être relié, par la couche de colle (35), au revêtement de siège (1) ou à des parties du siège (26) du véhicule automobile.

2. Revêtement de siège selon la revendication 1, **caractérisé en ce que** la couche de colle (35) est constituée d'une matière adhésive dont le collage ne peut être supprimé qu'en laissant des traces sur le revêtement de siège (1).

3. Revêtement de siège selon la revendication 1 ou 2, **caractérisé en ce que** la couche avant (7) présente, dans la zone destinée à la fente (33) entre le dossier (29) et le rembourrage de siège (27), un pli de fixation et d'introduction (16) qui est prolongé pour former le prolongement (34) en forme de bande.

4. Revêtement de siège selon la revendication 1 ou 2, **caractérisé en ce que** la couche arrière (8) formant aussi la poche de dossier (6) est prolongée pour former le prolongement (34) en forme de bande.

5. Revêtement de siège selon la revendication 3 ou 4, **caractérisé en ce que** la couche de colle (35) est réalisée en forme de bande ou de points et s'étend au moins dans la zone centrale du siège (26) du véhicule dans le sens de la largeur du revêtement de siège (1).

6. Revêtement de siège selon la revendication 3 ou 4, **caractérisé en ce que** la couche de colle (35) est réalisée en tant qu'étiquette (41) qui est collée sur le prolongement (34).

7. Revêtement de siège selon la revendication 3 ou 4, **caractérisé en ce que** la couche de colle (35) est une colle thermofusible.

8. Revêtement de siège selon la revendication 4, **caractérisé en ce que** la couche arrière (8), formant aussi la poche de dossier (6), peut être assemblée par la couche de colle (35) ou pli de fixation et d'introduction (16).

9. Revêtement de siège selon l'une des revendications 1 à 8, **caractérisé en ce que** la couche de colle (35) est disposée sur la face inférieure du prolongement (34) prévu sur la couche avant (7), ou sur la face supérieure du prolongement (34) prévu sur la couche arrière (8).

10. Revêtement de siège selon l'une des revendications 1 à 9, **caractérisé en ce que** la couche de colle (35) est disposée sur le bord libre du prolongement (34).
